# EUROPEAN PATENT APPLICATION

(11) **EP 4 782 086 A1**
(43) Date of publication of application: **29.07.2026**
(21) Application number: 25154181.9
(22) Date of filing: 27.01.2025
(51) Int. Cl.: B01D 53/06, B01D 46/52

(54) **ADSORBER ELEMENT AND ADSORBER DEVICE HAVING ADSORBER ELEMENT**

(71) Applicant: MANN+HUMMEL GmbH, 71636 Ludwigsburg (DE)
(72) Inventor: WELLER, Benedikt, 71636 Ludwigsburg (DE); BOCK, Lukas, 71636 Ludwigsburg (DE); WENGERT, Bernd, 71636 Ludwigsburg (DE); GEHWOLF, Klaus, 71636 Ludwigsburg (DE)
(74) Representative: Mann + Hummel Intellectual Property

(57) **Abstract**

An adsorber element (10), in particular for dehumidification of air, the adsorber element (10) comprising at least one pleated adsorber medium body (12, 14) circumferentially surrounding a rotational axis (16). Fold edges (18) of the at least one pleated adsorber medium body (12, 14) extend radial to the rotational axis (16).

## Description

### Technical Field

Embodiments refer to an adsorber element and an adsorber device having the adsorber element.

### Background Art

Adsorber elements are generally known. EP 2 609 982 B1 for example discloses an adsorption rotor comprising adsorption elements having a honeycomb structure.

A disadvantage of the honeycomb structure is that it is complex and therefor expensive to produce.

It is an object of the embodiments to allow for an easy and inexpensive production of an adsorber element.

This is achieved by an adsorber element according to claim 1 and by an adsorber device according to claim 13. Advantageous embodiments are given in the subclaims and the description.

### Summary

In accordance with the embodiments, an adsorber element is provided. Adsorption refers in particular to the accumulation of gases or dissolved substances (adsorbate) on the surface of solid substances (adsorbent), due to intermolecular forces. In present case, the adsorber element serves for the adsorption of molecules out of a gas. In particular, the adsorber element serves for the dehumidification of air. The adsorber element may be used for the food industry, for semiconductor manufacturing, for protection of server rooms against humidity, for drying buildings, in trains, in storage rooms and/or in machinery halls.

The adsorber element according to the embodiments comprises at least one pleated adsorber medium body circumferentially surrounding a rotational axis. Fold edges of the at least one pleated adsorber medium body extend radial to the rotational axis.

Indications of directions, such as radial, axial, circumferential, etc. generally refer to the rotational axis.

The fold edges may extend essentially radial to the rotational axis and may lie in a plane orthogonal to the rotational axis.

Due to the fact that the adsorber element has a pleated adsorber medium body, the adsorber medium body is easy and inexpensive to produce. Thus, the adsorber element is also easy and inexpensive to produce. Moreover, due to the pleated adsorber medium body the adsorber element is lightweight and the differential pressure, in fluid flow direction, before and after the adsorber medium body is low. Further, a large amount of adsorber medium may be provided in a pleated adsorber medium body.

In a particular embodiment, it is provided that the at least one pleated adsorber medium body comprises an adsorber medium comprising at least one adsorbent layer, the at least one adsorbent layer comprising or being made of at least one adsorber material, and the at least one adsorbent layer further comprising an adhesive. The respective adsorber material may serve for water adsorption. The adhesive may be a polyurethane based adhesive.

In a further particular embodiment, it is provided that the at least one adsorber material comprises any one or any combination of oxidic sorbents (e.g., silica, zeolite, and molecular sieves), polymer adsorbents and carbon-based adsorbents. A carbon-based adsorbent may be activated carbon. Silica, zeolite and/or molecular sieves are particularly suited for water adsorption.

In a further particular embodiment, it is provided that the adsorber medium further comprises a covering layer disposed at least on one side of the at least one adsorbent layer. The covering layer may be a carrier for the adsorber material of the adsorbent layer. The adsorber material may be glued to the respective covering layer by means of an adhesive, in particular by means of a polyurethane based adhesive.

The adsorber medium may have two adsorbent layers. In a first embodiment of the adsorber medium, the two adsorbent layers are jointly arranged between two covering layers. In a second embodiment, an additional covering layer (or separation layer) is provided between the two absorbent layers. In a third embodiment, two additional covering layers (or separation layers) are provided between the two absorbent layers. In all three embodiments, the covering layers may be of the same type, whereas the adsorbent layers may differ from each other regarding their adsorber material. For adsorption of a single molecule type, different adsorber materials for the adsorption of said molecule type may be provided. For example a combination of silicas, zeolites and/or molecular sieves may be used for water adsorption. Alternatively, for the adsorption of different molecule types, different adsorber materials may be provided. For example, a combination of silicas, polymer adsorbents and/or carbon-based adsorbents may be used for the adsorption of different gas components of a gas. At least one layer of the respective adsorber medium may be connected to its adjacent layer, in particular by gluing. All layers of the respective adsorber medium are generally jointly pleated.

In a further particular embodiment, it is provided that the covering layer comprises a fluid permeable nonwoven. The fluid may be air, in particular comprising water vapor.

In a further particular embodiment, it is provided that the covering layer has particle filtration properties. Thus, the adsorber element can be used for particle filtration and gas adsorption at the same time.

In a further particular embodiment, the adsorber element further comprises a band sealing a radially inner and/or outer circumferential face of the at least one pleated adsorber medium body. Thus, an easy interchangeability of the respective adsorber medium body is obtained. The radially inner and/or outer circumferential face of the respective adsorber medium may be glued to the band. The band may be impermeable to fluid.

In a further particular embodiment, it is provided that the at least one pleated adsorber medium body comprises two pleated adsorber medium bodies coaxially aligned to each other. The two adsorber medium bodies may comprise the same or different adsorber material. Thus, the adsorber medium body having one absorber material may be exchanged independently from the adsorber medium body having another adsorber material.

In a further particular embodiment, it is provided that a first one of the two pleated adsorber medium bodies encompasses a second one of the two pleated adsorber medium bodies. Thus, the pleat spacing can be kept essentially the same in radial direction, since the adsorber medium bodies are pleated independently from one another. The respective adsorber medium body and the other adsorber medium body may have the same adsorber material. It is also conceivable that the respective adsorber medium body and the other adsorber medium body may differ regarding their adsorber material. The respective adsorber medium body at its radially inner face and the other adsorber medium body at its radially outer face may be sealed by the same band.

In a further particular embodiment, the adsorber element may further comprise an adhesive on a radially inner circumferential face of the first one of the two pleated adsorber medium bodies, the adhesive being configured to connect the adsorber element directly to a shaft of an adsorber device. Advantageously, the adsorber element does not need an inner band and/or any further connector to connect the adsorber element to the shaft. The adsorber element can replace a housing due to the glued and very strong connection to the adsorber device.

In a further particular embodiment, the adsorber element further comprises a support structure in which the at least one pleated adsorber medium body is accommodated. The respective adsorber medium body may be arranged stationary in relation to the support structure. The support structure may be cylindrical. The support structure may have a cylindrical outer wall at its circumferential face. The outer wall may be closed. One (axial) end face of the support structure may be perforated for fluid flow through the support structure. The other (axial) end face of the support structure may be open for inserting and optionally removing the respective adsorber medium.

The one end face of the support structure may have radially extending ribs spaced apart from each other. At their inner ends, the radially extending ribs may merge into a centrally arranged hub of the support structure. At their outer ends, the radially extending ribs may merge into the circumferentially outer wall of the support structure. Additionally, the one end face of the support structure may have circular ribs spaced apart from each other and arranged coaxial to one another. The circular ribs may be in one piece (i.e. monolithic) with the radially extending ribs.

The hub may have a cylindrical inner wall extending from a circular rib into the interior of the support structure. The inner wall may be closed. The hub may have a central aperture, in particular for receiving the shaft for rotating the adsorber element.

A cylindrical middle wall may extend into the interior of the support structure, in particular emerging from an intermediate circular rib, which may be arranged between an outermost and innermost radial rib. The middle wall may be closed. The outer wall, the middle wall, the inner wall and the central passage may be coaxially arranged to each other.

In a further particular embodiment, the respective adsorber medium body, which is sealed at its radially inner and/or radially outer circumferential face by a band, is accommodated exchangeable in the support structure. Due to the fact that the respective adsorber medium is exchangeable, an easy variation of fold distances of the adsorber element is achievable. By variation of the fold distances the differential pressure of the filter element and/or the performance of the filter element may be varied. Furthermore, this allows reusing the support structure when the adsorption capacity of the at least one adsorber medium body has been exhausted.

In a further particular embodiment, it is provided that the support structure seals a radially inner and/or outer circumferential face of the at least one pleated adsorber medium body. To the inside of the outer wall of the support structure, the outer circumferential face of the respective adsorber medium body may be connected. To one side of the middle wall, the inner circumferential face of the respective adsorber medium body and to the other side of the middle wall, the outer circumferential face of the other adsorber medium body may be connected. To the outside of the inner wall, the inner circumferential face of the other adsorber medium may be connected.

In a further particular embodiment, it is provided that the support structure comprises at least one partition wall engaging into a fold of the at least one pleated adsorber medium body. The respective partition wall may extend away from one of the radially extending ribs into the interior of the support structure. The respective partition wall may extend between the inner wall and the outer wall. Typically, the respective partition wall has an axial and radial extension.

The embodiments also refer to an adsorber device comprising a housing and the adsorber element as described above. The adsorber element is rotatable in relation to the housing. The support structure may be rotatably mounted in the housing.

In a further particular embodiment, the adsorber device further comprises a motor configured to continuously rotate the adsorber element. The motor may drive a shaft on which the support structure is fixed.

In a further particular embodiment, it is provided that the housing comprises an adsorption channel and a desorption channel, each of the adsorption channel and the desorption channel directing fluid through the at least one pleated adsorber medium body in a flow direction parallel to the rotational axis. At least one blower device may be provided for generating fluid flow through the adsorption channel and/or the desorption channel. At least one heater may be provided for heating the air flow through the desorption channel for regeneration of the adsorber element.

In a further particular embodiment, the adsorber device is a dehumidifier or a dryer.

### Brief Description of Drawings

Other advantages and features of the embodiments will be appreciated from the following description with reference to the figures of the drawing, which show significant details, and from the claims. The individual features, as described above or explained below, may each be implemented individually or implemented together in any useful combination in variants of the embodiments.
Fig. 1 shows, schematic and not to scale, a perspective exploded view from the front of a first embodiment of an adsorber element, in which two adsorber medium bodies are sealed each on their radially inner and outer circumferential faces by a supporting structure.
Fig. 2 shows, schematic and not to scale, a perspective view from the rear of a supporting structure modified compared to the supporting structure of Fig. 1.
Fig. 3 shows, schematic and not to scale, a perspective exploded view from the rear of a second embodiment of an adsorber element, in which two adsorber medium bodies are sealed each on their radially inner and outer circumferential face by a band.
Fig. 4 shows, schematic and not to scale, a perspective exploded view from the rear of a third embodiment of an adsorber element, wherein a radially inner circumferential face of an outer adsorber medium body and a radially outer circumferential face of an inner adsorber medium body are sealed by the same band.
Fig. 5 shows, schematic and not to scale, a transvers section through an adsorber medium of the adsorber medium bodies shown in Figs. 1, 3, 4.
Fig. 6 shows, schematic and not to scale, an adsorber device having the adsorber element.
Fig. 7 shows, schematic and not to scale, essential parts of the adsorber device according to Fig. 6.
Fig. 8 shows, schematic and not to scale, a perspective exploded view of a fourth embodiment of an adsorber element including an adhesive on a radially inner circumferential face of an inner adsorber medium body.
Fig. 9 shows, schematic and not to scale, a plan view of the adsorber element of Fig. 8.
Fig. 10 shows, schematic and not to scale, a cross-sectional view of a line A-A through the adsorber element of Fig. 9.
Fig. 11 shows, schematic and not to scale, a cross-sectional view of a line B-B through the adsorber element of Fig. 9.

### Description of Embodiments

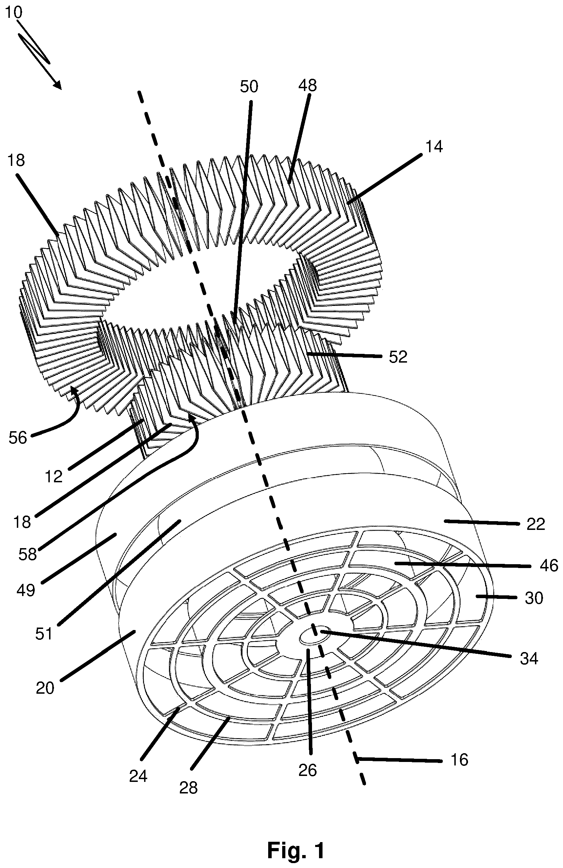

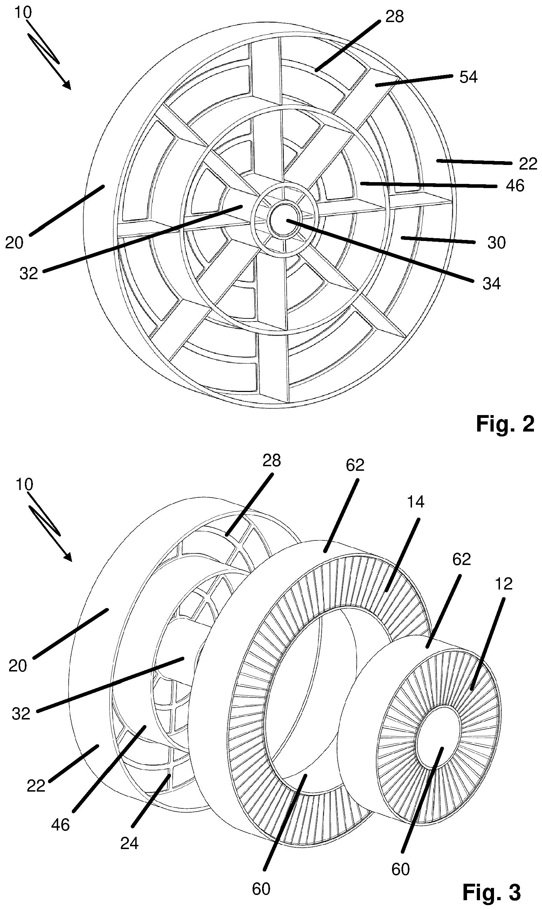

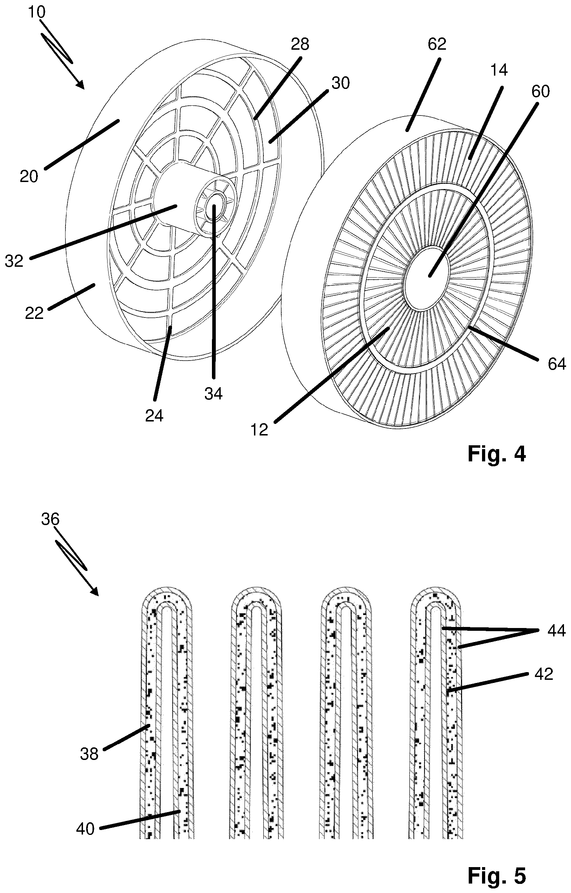

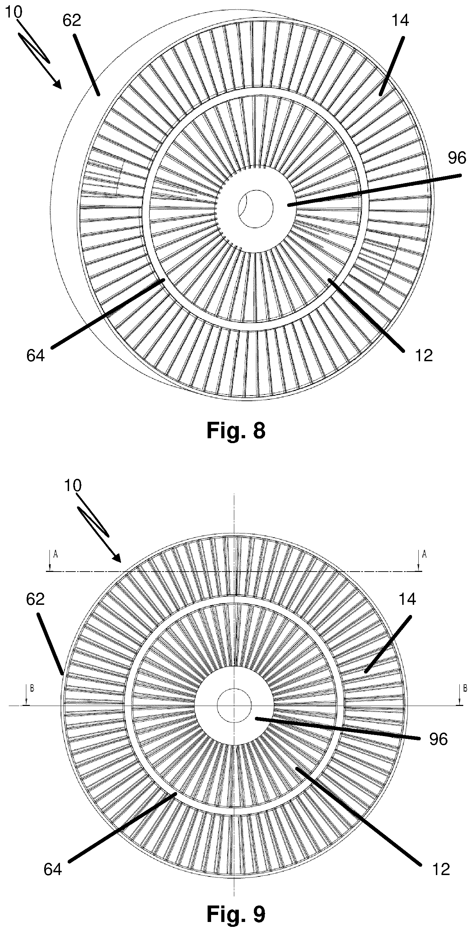

In Fig. 1 and 2 show a first embodiment of the adsorber element 10. Fig. 3 shows a second embodiment of the adsorber element 10. Fig. 4 shows a third embodiment of the adsorber element 10. Fig. 8 shows a fourth embodiment of the adsorber element 10. In each of the embodiments, the adsorber element 10 is formed as described in the following.

The adsorber element 10 has an inner adsorber medium body 12 and an outer adsorber medium body 14. The outer adsorber medium body 14 circumferentially encompasses the inner adsorber medium body 12. Both adsorber medium bodies 12, 14 circumferentially encompass a rotational axis 16. The outer adsorber medium body 14 is aligned coaxially to the inner adsorber medium body 12. In particular, both adsorber medium bodies 12, 14 are aligned coaxially to the rotational axis 16.

Each of the adsorber medium bodies 12, 14 is pleated. Fold edges 18 of each of the adsorber medium bodies 12, 14 extend in two planes that are perpendicular to the rotational axis 16. These two planes are offset to one another and correspond to the axial faces of the adsorber medium bodies 12, 14. In particular the fold edges 18 of each of the adsorber medium bodies 12, 14 extend radially to the rotational axis 16. In other embodiments, the fold edges 18 may have other orientations with respect to the rotational axis 16, e.g., the fold edges 18 may extend parallel to the rotational axis 16.

Furthermore the adsorber element 10 has a support structure 20. The support structure 20 is designed cylindrically. The support structure 20 has at its circumference a cylindrical outer wall 22 that is closed. One end face of the support structure 20 has radially extending ribs 24, which are spaced apart from one another. The radially extending ribs 24 merge with their inner ends into a centrally arranged hub 26 of the support structure 20 and merge with their outer ends into the circumferentially outer wall 22 of the support structure 20. Adittionally, the one end face of the support structure 20 has, integral with the radially extending ribs 24, circular ribs 28 spaced apart from each other. The circular ribs 28 are aligned coaxially to one another. In this grid-like arrangement, the radially extending ribs 24 and the circular ribs 28 form flow openings 30 for fluid flow through the support structure 20. The hub 26 comprises a cylindrical inner wall 32 that is closed. The inner wall 32 extends away from a circular rib 28 into the interior of the support structure 20. The hub 26 has a central passage 34. The other end face of the support structure 20 is open for inserting and optionally removing the two adsorber medium bodies 12, 14.

Inside the support structure 20 the outer adsorber medium body 14 and the inner adsorber medium body 12 are accommodated stationary in relation to the support structure 20.

Each of the adsorber medium bodies 12, 14 has an adsorber medium 36 (see Fig. 5). The adsorber medium 36 has an adsorbent layer 38. The adsorbent layer 38 comprises or is made of an adsorber material 42 in form of adsorber particles. The adsorber material 42 comprises any one or any combination of oxidic sorbents (e.g., silica, zeolite, and molecular sieves), polymer adsorbents and carbon-based adsorbents. The adsorbent layer 38 further includes an adhesive 40. On both sides of the adsorbent layer 38, the adsorber medium 36 further has a covering layer 44 that adjoins or is disposed on the adsorbent layer 38. The covering layers 44 are part of the adsorber medium 36. Each of the covering layers 44 serves as carrier for the adsorber material 42, which is fixed to the covering layers 44 by the the adhesive 40. Each of the covering layers 44 comprises a fluid permeable non-woven.

In the first embodiment of the adsorber element according to Fig. 1 and 2 and the second embodiment according to Fig. 3, emerging from a radially central circular rib 28, a cylindrical middle wall 46 extends into the interior of the support structure 20. The middle wall 46 is closed.

In the first embodiment of the adsorber element 10 according to Fig. 1 and 2, the circumferentially outer face 48 of the outer adsorber medium body 14 is connected to the inside of the outer wall 22 of the support structure 20 by adhesive (cf. adhesive layer 49). The circumferentially inner face 50 of the outer adsorber medium body 14 is connected to one side of the middle wall 46 by adhesive (cf. adhesive layer 51). The circumferentially outer face 52 of the inner adsorber medium body 12 is connected to the other side of the middle wall 46 by adhesive. The circumferentially inner face of the inner adsorber medium body 12 is connected to the outside of the inner wall 32 by adhesive. Due to the respective connection by adhesive, the inner adsorber medium body 12 and the outer adsorber medium body 14 are each circumferentially sealed by the support structure 20.

In the first embodiment of the adsorber element, from every radially extending rib 24 a partition wall 54 extends into the interior of the support structure 20, see Fig. 2. Each of the partition walls 54 extends between the outer wall 22 and the inner wall 32 while running through the middle wall 46. A respective partition wall 54 engages between the outer wall 22 and the middle wall 46 into an axially open fold 56 of the outer adsorber medium body 14 and also enganges between the middle wall 46 and the inner wall 32 into an axially open fold 58 of the inner adsorber medium body 12. The partition walls 54 serve for preventing cross flow.

In the second embodiment of the adsorber element 10 according to Fig. 3, every adsorber medium body 12, 14 is connected by adhesive on its circumferential inside to an inner band 60 and on its circumferential outside to an outer band 62. Thus, the radially inner and outer circumferential face of each adsorber medium body 12, 14 is sealed by the respective band 60, 62. The outer band 62 on the outer adsorber medium body 14 may be in sealing contact with the outer wall 22 of the support structure 20. The inner band 60 on the outer adsorber medium body 14 may be in sealing contact with the one side of the middle wall 46 of the support structure 20. The outer band 62 on the inner adsorber medium body 12 may be in sealing contact with the other side of the middle wall 46. The inner band 60 on the inner adsorber medium body 12 may be in sealing contact with the inner wall 32.

In the third embodiment of the adsorber element according to Fig. 4, a radially outer circumferential face of the outer adsorber medium body 14 is connected by adhesive to an outer band 62 and the radially inner circumferential face of the inner adsorber medium body 12 is connected by adhesive to an inner band 60. The outer band 62 on the outer adsorber medium body 14 may be in sealing contact with the outer wall 22 of the support structure 20. The inner band 60 on the inner adsorber medium body 12 may be in sealing contact with the inner wall 32. A radially inner circumferential face of the outer adsorber medium body 14 and a radially outer circumferential face of the inner adsorber medium body 12 are each connected by adhesive to the same single intermediate band 64 and thus are sealed by this intermediate band 64.

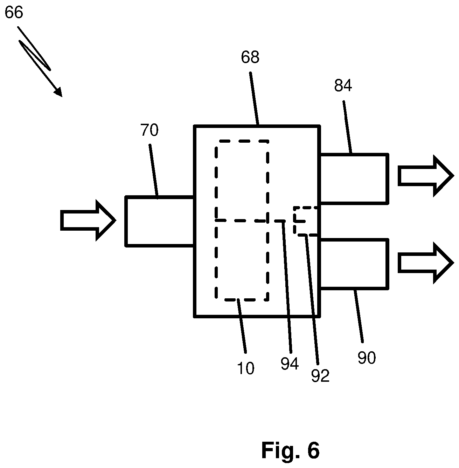

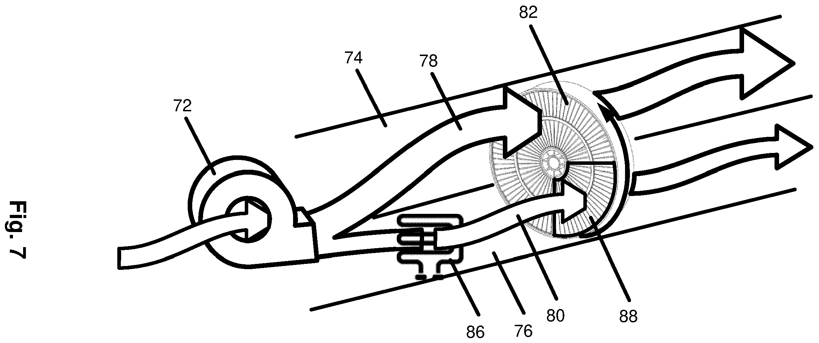

Figs. 6 and 7 show an adsorber device 66 having a housing 68. Inside the housing 68 an adsorber element 10 according to the embodiments is accommodated rotatably in relation to the housing 68. In an inlet 70 of the housing 68 a fluid flow to be purified is sucked in by a blower 72 inside the housing 68, see Fig. 7. The blower 72 supplies an adsorption channel 74 and a desorption channel 76 of the adsorber device 66 with the fluid resulting in an adsorption fluid flow 78 in the adsorption channel 74 and a desorption fluid flow 80 in the desorption channel 76. The adsorption channel 74 is arranged to guide the adsorption fluid flow 78 through an adsorption area 82 of the adsorber element 10 in parallel to the rotational axis 16 and then to a first outlet 84 (Fig. 6) from which purified fluid emerges. In the desorption channel 76 (Fig. 7) a heater 86 is arranged for heating the desorption fluid flow 80. The heated desorption fluid flow 80 is guided by the desorption channel 76 through a desorption area 88 of the adsorber element 10 in parallel to the rotational axis 16 for regeneration of the adsorber element 10. In fluid flow direction, behind the adsorber element 10 the desorption fluid flow 80 is guided by the desorption channel 76 to a second outlet 90 (Fig. 6).

During adsorption and desorption the adsorber element 10 is rotated continuously by means of a motor 92 via a shaft 94, see Fig. 6. Thereby the rotating adsorption element 10 rotates through the adsorption area 82 and the desorption area 88 which are stationary in relation to the adsorption channel 74 and the desorption channel 76.

Figs. 8 to 11 show the adsorber element 10 including an adhesive 96 on a radially inner circumferential face of the inner adsorber medium body 12.

Referring to Figs. 8, 9 and 11, the adsorber element 10 includes the adhesive 96 instead of the inner band 60 shown in Figs. 3 and 4. The adhesive 96 is configured to connect, fix and/or glue the adsorber element 10 directly to, e.g., the shaft 94 of the adsorber device 66 shown in Fig. 6. In embodiments, the adhesive 96 may include, for example, a hot-melt adhesive and/or a thixotropic polyurethane (PUR) foam.

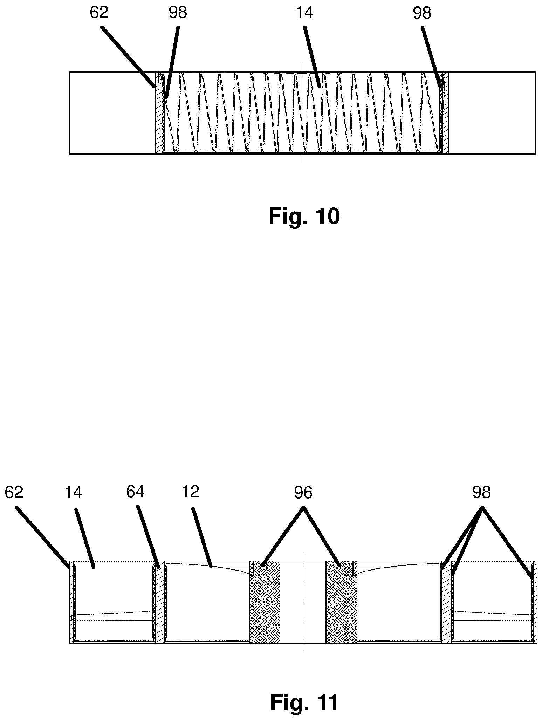

Further referring to Figs. 10 and 11, the adsorber element 10 further includes an adhesive layer 98 between the outer band 62 and the outer adsorber medium body 14, between the outer adsorber medium body 14 and the intermediate band 64, and between the intermediate band 64 and the inner adsorber medium body 12. The adhesive layer 98 may include a glue configured to connect, fix and/or glue the outer band 62 to the outer adsorber medium body 14, the outer adsorber medium body 14 to the intermediate band 64, and the intermediate band 64 to the inner adsorber medium body 12.

### Reference Numbers

- 10: adsorber element
- 12: inner adsorber medium body
- 14: outer adsorber medium body
- 16: rotational axis
- 18: fold edge
- 20: support structure
- 22: outer wall
- 24: radially extending rib
- 26: hub
- 28: circular rib
- 30: flow opening
- 32: inner wall
- 34: central passage
- 36: adsorber medium
- 38: adsorbent layer
- 40: adhesive
- 42: adsorber material
- 44: covering layer
- 46: middle wall
- 48: outer face of the outer adsorber medium body
- 49: adhesive layer
- 50: inner face of the outer adsorber medium body
- 51: adhesive layer
- 52: outer face of the inner adsorber medium
- 54: partition wall
- 56: fold of the outer adsorber medium body
- 58: fold of the inner adsorber medium body
- 60: inner band
- 62: outer band
- 64: intermediate band
- 66: adsorber device
- 68: housing
- 70: inlet of the housing
- 72: blower
- 74: adsorption channel
- 76: desorption channel
- 78: adsorption fluid flow
- 80: desorption fluid flow
- 82: adsorption area
- 84: first outlet
- 86: heater
- 88: desorption area
- 90: second outlet
- 92: motor
- 94: shaft
- 96: adhesive
- 98: adhesive layer

## Claims

1. An adsorber element (10), in particular for dehumidification of air, the adsorber element (10) comprising at least one pleated adsorber medium body (12, 14) circumferentially surrounding a rotational axis (16),
wherein fold edges (18) of the at least one pleated adsorber medium body (12, 14) extend radial to the rotational axis (16).

2. The adsorber element (10) according to claim 1, **characterized in that** the at least one pleated adsorber medium body (12, 14) comprises an adsorber medium (36) comprising at least one adsorbent layer (38), the at least one adsorbent layer (38) comprising or being made of at least one adsorber material (42), and the at least one adsorbent layer (38) further comprising an adhesive (40).

3. The adsorber element (10) according to claim 2, **characterized in that** the at least one adsorber material (42) comprises any one or any combination of oxidic sorbents, polymer adsorbents and carbon-based adsorbents.

4. The adsorber element (10) according to any one of claims 2 to 3, **characterized in that** the adsorber medium (36) further comprises a covering layer (44) disposed at least on one side of the at least one adsorbent layer (38).

5. The adsorber element (10) according to claim 4, **characterized in that** the covering layer (44) comprises a fluid permeable nonwoven having particle filtration properties.

6. The adsorber element (10) according to any one of preceding claims, further comprising a band (60, 62, 64) sealing a radially inner and/or outer circumferential face of the at least one pleated adsorber medium body (12, 14).

7. The adsorber element (10) according to any one of preceding claims, **characterized in that** the at least one pleated adsorber medium body (12, 14) comprises two pleated adsorber medium bodies (12, 14) coaxially aligned to each other.

8. The adsorber element (10) according to claim 7, **characterized in that** a first one of the two pleated adsorber medium bodies (12) encompasses a second one of the two pleated adsorber medium bodies (14).

9. The adsorber element (10) according to claim 8, further comprising an adhesive (96) on a radially inner circumferential face of the first one of the two pleated adsorber medium bodies (12), the adhesive (96) being configured to connect the adsorber element (10) directly to a shaft (94) of an adsorber device (66).

10. The adsorber element (10) according to any one of preceding claims, further comprising a support structure (20) in which the at least one pleated adsorber medium body (12, 14) is accommodated.

11. The adsorber element (10) according to claim 10, **characterized in that** the support structure (20) seals a radially inner and/or outer circumferential face (48, 50, 52) of the at least one pleated adsorber medium body (12, 14).

12. The adsorber element (10) according to claim 10 or 11, **characterized in that** the support structure (20) comprises at least one partition wall (54) engaging into a fold (56, 58) of the at least one pleated adsorber medium body (12, 14).

13. An adsorber device (66) comprising:
a housing (68); and
the adsorber element (10) according to any one of preceding claims, the adsorber element (10) being rotatable in relation to the housing (68).

14. The adsorber device (66) according to claim 13, further comprising a motor (92) configured to continuously rotate the adsorber element (10).

15. The adsorber device (66) according to claim 13 or 14, **characterized in that** the housing (68) comprises an adsorption channel (74) and a desorption channel (76), each of the adsorption channel and the desorption channel (74, 76) directing fluid through the at least one pleated adsorber medium body (12, 14) in a flow direction parallel to the rotational axis (16).
